# EUROPEAN PATENT APPLICATION

(11) **EP 0 890 409 A2**
(43) Date of publication of application: **13.01.1999**
(21) Application number: 98112229.4
(22) Date of filing: 02.07.1998
(51) Int. Cl.: B23K 11/11

(54) **An improved system for welding railway or subway cars**

(30) Priority: 11.07.1997 IT TO970615
(71) Applicant: Bisiach, Bruno, I-10133 Turin (IT)
(72) Inventor: Bisiach, Bruno, I-10133 Turin (IT)
(74) Representative: Robba, Pierpaolo

(57) **Abstract**

A system is disclosed for welding railway and subway cars comprising at least a first and a second welding device (19, 21). Besides being longitudinally movable along both a vertical and a transverse direction with respect to the car, the first welding device (19), is rotatable about the longitudinal axis of the car through a pivotal connection (at 37) to a girder (34), and is provided with a disc (38) for rotating about an axis orthogonal to the car longitudinal axis. The second welding device (21) is provided with a bracket (24) having an end longitudinally slidable with respect to a longitudinal supporting rail (14) and the other end rotatably connected (at 25) to a connecting rod (26) that is pivoted so as to follow the profile of the car longitudinal "camber".

## Description

The present invention refers to an improved system for welding railway or subwayr cars and the like.

Cars for transporting people on rails are of two main types: aluminum cars and stainless steel cars.

The manufacturing of both types of cars for railway and subway systems substantially comprises the steps of separately preparing the car floor or well, the two side frames (body sides) and the roof, and then manually welding together these four parts, that is by the intervention of single workers to weld first the floor to the two body sides, and then the roof to the body sides, after positioning the roof over the sides. Welding is achieved through the so called "Mig-Mag" process for aluminum and through spot welding in case of stainless steel. These welding operations are already troublesome when manufacturing railway cars, since the rewelding of the welding spots implies the presence of critical points on the car body sides in the future operating life of the car. The problem is worsened when manufacturing subway cars, since the body sides of these cars are not formed as one-piece parts, but rather comprise a number of sections between which several doors (at least three on each body side) are to be located for passengers entrance and exit. In this case, therefore, in addition to the need of properly welding together the car sections, these latter are also to be calibrated and properly positioned in respect of each other along the car length.

As herein used the term "properly positioning" means the mutual coupling between the main parts of a car, i.e. the floor, the body sides and the roof, in accordance with the measures requested by the design. While allowing for coupling and working tolerancies, such measures are preferably to be met through an automatic adjusting and welding procedure. In this respect the applicant has already developed an automated system for solving the above mentioned problem, which system is disclosed in Italian patent application No. TO97A000354. Through such a system a satisfactory "Mig-Mag" welding is ensured.

The object of the present invention is to improve the system disclosed in the above mentioned Italian patent application No. TO97A000354 by providing means that allows an equally effective welding even of stainless steel cars, that is means adapted to accomplish a spot welding. This way an improved automatic system is provided which is capable of accomplishing the welding operations of large size cars such as those of railway, subway and similar transport systems, capable to withstand the high welding pressures and to weld parts of complex shapes as are those of the above mentioned cars.

A further object of the present invention is to ensure a high quality of the final car that has been subjected to such complex operations of the above mentioned type, where the several parts of a car are joined together while respecting the operation tolerancies and without critical points due to manual working.

The above and other objects and advantages of the invention that will beconme evident from the following description, are achieved through an improved system for welding railway, subway cars and the like as claimed in independent claims 1 to 3. Preferred embodiments and modifications of the invention are claimed in claims 4 to 14.

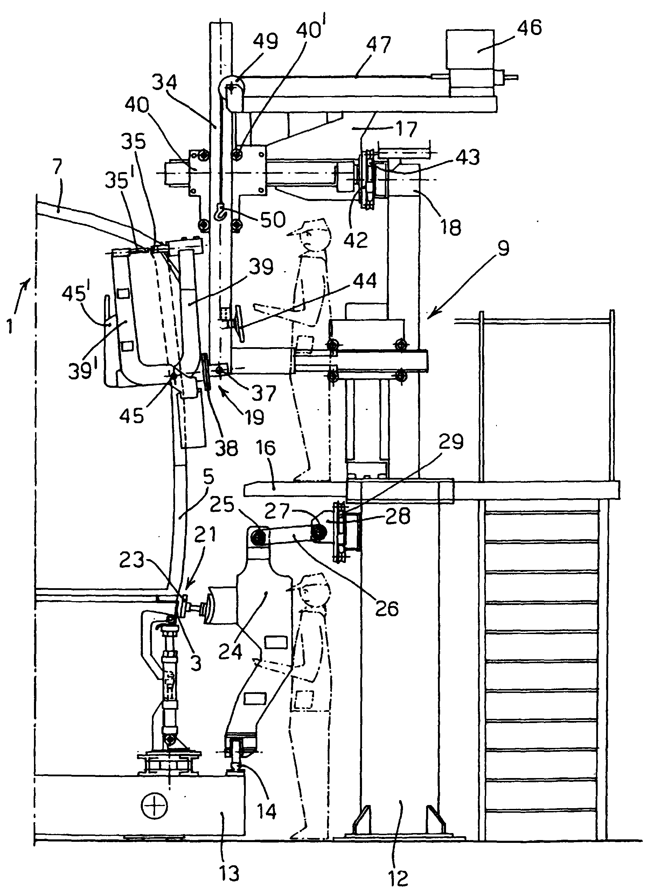

The present invention will be better understood through some preferred embodiments thereof, only disclosed for exemplary and not limiting purposes, with reference to the attached drawing the Figure 1 of which is a partial cross section side view of the improved system according to the invention.

With reference to Fig. 1, the improved system for welding railway, subway cars and the like according to the invention is a modular system i. e. it is capable of automatically accomplishing - either simultaneously or separately - both welding operations, i.e. a continuous welding of the side lower portion and a spot welding of the side complex shapes in which window and door openings are formed. In accordance with the preferred embodiment of the invention illustrated in this application, a "complete" welding system is disclosed that can be applied to a global system for properly aligning and welding cars such as the system disclosed in the above mentioned Italian patent application whereby the system is capable of carrying out both a "Mig-Mag" welding (as dislosed in the above mentioned Italian patent application), and a spot welding. The system of the present invention allows to manufacture a complete car 1 (either a railway or a subway car), by welding to each other a floor 3, at least a side panel or side 5 and a roof 7. Of course different types of systems are possible, e.g. using only one of the devices described hereinbelow, capable of accomplishing the operations required for the single welding devices.

The system of the present invention comprises a supporting frame 9 extending along the whole body side of the car to be manufactured. This supporting frame 9 is mounted on posts 12 connected to each other through bed plates 13 over which rest rail supports 14 that extend om the whole body side of the car. The supporting frame 9 is further provided with walkways 16 over which operate the personnel controlling the assembling and/or welding operations.

Thanks to the disclosed arrangement of the supporting frame 9, the apparatus of the present invention can also be employed for welding a car body from inside in the presence of openings for windows and doors. To this purpose the frame 9 is provided with an upper elongated supporting member 17 connected to the upper ends 18 of each of said posts 12 and extending for the whole length of the car sides. By slidably connecting to the frame a first welding device 19 that is longitudinally movable and can enter into the car through openings formed in the car roof, a completely automated inner welding task can be accomplished.

In order to properly weld together the main component parts forming a railway car or a subway car, at the moment of joining together the sides 5 and the floor 3, this latter must not lie completely flat but has to be sligthly arcuated upward with respect to ground, forming a camber. This is required since after completing the welding of the car, when the car fittings and equipments are fitted inside the coach, the weight of such fittings and equipments will act to return the floor to a flat configuration.

In order to continuously welding the floor 3 to the sides 5 while maintaining such curvature or "camber", the system of the present invention provides for a second welding device 21 slidably mounted along the rail support 14: since the support 14 is so shaped (e.g. by inserting proper shims where necessary) as to follow the curved profile of the floor 3 through the system disclosed in the above mentioned Italian patent application, also the second welding device 21, in its operating welding motion, will follow the precise profile of the floor curvature.

The second welding device 21 has to be designed so as to solve two main working problems: (a) withstanding the high welding pressures that would tend to move the device far from the car side 5; and (b) being adjustable to the different car designs, i.e. allowing the welding electrode 23 to be tilted through a rotation with respect to the sheet plane, so as to track the contour of the different types of cars to be welded.

In order to solve the above problems, the second welding device 21 is coupled to a shaped bracket 24 the lower portion of which is built to be both longitudinally slidable with respect to the support 14, and firmly permanently secured by such support 14 in a direction perpendicular to the longitudinal direction. Additionally the upper portion of such bracket 24 provides for a pivot point 25 to wich a connecting rod 26 is connected, that in turn is coupled to a pivot point 27 on a trolley 28. The trolley 28 is slidable on rails 29 secured to the supporting frame 9. Thanks to the connecting rod 26 the second welding device 21 can follow the contour of the lower rail 14 so as to maintain the car "camber". Thanks to this feature of the invention cars of any shapes can be welded. Moreover the coupling between the second welding device 21, the support 14 and frame 9 allows to the welding device 21 to overcome all the welding forces generated during the operation and that would tend to move the device far from the car, thus jeopardizing the proper welding process, since the connecting rod 26 resists such outward force.

As already pointed out, in order to weld the roof 7 to the sides 5 there is provided the first welding device 19, slidably coupled to the frame 9 through a connecting girder 34 and provided with corresponding welding electrodes 35, 35'. The first welding device 19 must be capable of welding complex shapes, that is shapes in which openings for windows and door are formed: therefore such device must be capable of moving along the longitudinal, vertical and transverse directions of the car, and be rotatable both about the car longitudinal axis and about an axis perpendicular thereto.

In order to achieve these five degrees of freedom the first welding device 19 is designed to be pivotally coupled at 37 to the girder 34 so that it can rotate about the car longitudinal axis. The rotation about an axis orthogonal to the longitudinal direction is accomplished through a disc 38 on which rest the electrode holder arms 39, 39' carrying the welding electrodes 35, 35', respectively. Finally, in view of the particular design of the system disclosed in the above Italian patent application, it is possible to accomplish a longitudinal, vertical and transverse motion of the welding device 19 along the car side. Namely, the girder 34 is connected to a linear prismatic guide 40 and can slide with respect to this latter through wheels 40'; the prismatic guide 40 is connected so as to be transversely slidable with respect to a beam 41 that in turn is connected to a trolley 42 longitudinally movable along rails 43 connected to the frame 9.

In order to accomplish the two above indicated motions, suitable conventional means are provided: in the illustrated embodiment, only a wheel 44 is shown for the rotation about the disc 38.

The two welding electrodes 35, 35' are connected to the electrode holder arms 39, 39', respectively, that are pivotally mounted at 45: by means of a lever 45' it is possible to adjust the opening and closing of the arms 39, 39' for positioning them at the welding position.

The big weight of the first welding device 19 would tend both to create a downward acting pulling force because of the gravity force, and to make difficult the displacement along the above indicated five degrees of freedom to an operator. A counterweight member 46 is therefore provided which is connected to the girder 34 and to the frame 9: the pulling force of such counterweight member 46 can be adjusted through a metal rope 47 extending about a pulley 49 that is fastened to a hook 50 supporting the first welding device 19 and controlled through conventional means (not shown).

As indicated above, the system can further comprise internal welding devices to completec the assembly and the welding of the railway or subway car.

Of course in a global welding system for manufacturing railway, subway cars and the like, there can be further provided a plurality of pairs of welding devices 19, 21 in accordance with the type and the length of the cars to be welded.

## Claims

1. An improved system for welding railway, subway cars and the like, said cars comprising a floor (3), at least a body side (5) and a roof (7), said system comprising at least a first and a second welding device (19, 21), said welding devices (19, 21) being slidably mounted to and supported by a supporting frame (9), said welding devices (19, 21) being adapted to accomplish the welding of said floor (3) to said body side (5), of said body side (5) to said roof (7), and of each body side (5) at the positions where openings for the windows and the doors are provided,
characterized in that:
- said first welding device (19) is provided with a linear prismatic guide (40) mounted to said supporting frame (9) for allowing both an axial and a transverse sliding motion in respect thereof, with a girder (34) secured to said prismatic guide (40) and vertically slidable with respect thereto, said first welding device (19) being rotatable about the longitudinal axis of said car through a pivotal connection (at 37) of said girder (34);
- said first welding device (19) is equipped with a disc (38) fastened to said pivotal connection (at 37) of said girder (34), said first welding device (19) being further rotatable about an axis orthogonal to the longitudinal axis of said car through said disc (38); and
- said second welding device (21) is equipped with a bracket (24) having one end connected to and longitudinally slidable in respect of a longitudinal supporting rail (14), and the other end rotatably connected (at 25) to a connecting rod (26), said connecting rod (26) being in turn rotatably connected (at 27) to a trolley (28) that is slidable along said frame (9), whereby said second welding device (21) can follow the longitudinal "camber" profile of said car.

2. An improved system for welding the lower portions of railway, subway cars and the like, said cars comprising a floor (3), at least a body side (5) and a roof (7), said system comprising at least a welding device (21), said welding device (21) being slidably mounted to and supported by a supporting frame (9), said welding device (21) being adapted for welding said floor (3) to said at least a body side (5), characterized in that said welding device (21) is equipped with a bracket (24) having one end connected to and longitudinally slidable in respect of a longitudinal supporting rail (14), and the other end rotatably connected (at 25) to a connecting rod (26), said connecting rod (26) being in turn rotatably connected (at 27) to a trolley (28) that is slidable along said frame (9), whereby said second welding device (21) can follow the longitudinal "camber" profile of said car.

3. An improved system for welding parts of railway, subway cars and the like having complicated shapes, said cars comprising a floor (3), at least a body side (5) and a roof (7), said system comprising at least a welding device (19), said welding device (19) being slidably mounted to and longitudinally slidable in respect of a supporting frame (9), said welding device (19) being adapted to carry out the welding of said body side (5) to said floor (3), and of each body side (5) at the positions where openings for the windows and the doors are provided, characterized in that:
- said welding device (19) is provided with a linear prismatic guide (40) mounted to said supporting frame (9) for allowing both an axial and a transverse sliding motion in respect thereof, with a girder (34) secured to said prismatic guide (40) and vertically slidable with respect thereto, said first welding device (19) being rotatable about the longitudinal axis of said car through a pivotal connection (at 37) of said girder (34);
- said first welding device (19) is equipped with a disc (38) fastened to said pivotal connection (at 37) of said girder (34), said first welding device (19) being further rotatable about an axis orthogonal to the longitudinal axis of said car through said disc (38).

4. An improved system as claimed in any of the preceding claims, characterized in that said supporting frame (9) comprises a number of posts (12) arranged over the whole length of the car body side.

5. An improved system as claimed in any of the preceding claims, characterized in that it further comprises an inner welding device, said inner welding device being supported by said supporting frame (9) and being adapted to weld the inner parts of the car by entering into the cars through openings formed in said roof (7).

6. An improved system as claimed in any of claims 4 or 5, characterized in that said supporting frame (9) further comprises an upper elongated supporting member connected to the upper ends of each of said posts (12) arranged over the whole length of the car body side.

7. A system as claimed in any of the preceding claims, characterized in that said first welding device (21) is rotated by rotation controlling means (44).

8. A system as claimed in claim 7, characterized in that said means for controlling the rotation of said first welding device (19) comprises a hand wheel (44).

9. A system as claimed in any of the preceding claims, characterized in that said welding devices (19, 21) are adapted to simultaneously weld said floor (3) to said body side (5) and said body side (5) to said roof (7).

10. A system as claimed in any of the preceding claims, characterized in that said welding devices (19, 21) are spot welding devices.

11. A system as claimed in any of claims 1 and from 3 to 10, characterized in that the welding electrodes (35, 35') of said first welding device (19) are connected to corresponding electrode holder arms (39, 39') pivotally secured (at 45) through a lever (45'), the opening and the closing of said arms (39, 39') being adjustable to position them at the proper welding locations.

12. A system as claimed in anyone of claims 1 and from 3 to 11, characterized in that said first welding device (19) is further provided with a counterweight member (46) connected to said girder (34) and to said frame (9), the pulling of said counterweight (46) being adjustable through a metal rope (47) rotatable about a pulley (49) secured to a hook (50) supporting said first welding device (19) and controlled by adjusting means.

13. A system as claimed in any of the preceding claims, said system being fitted to a system for aligning and welding railway, subway cars and the like.
